# EUROPÄISCHE PATENTSCHRIFT

(11) **EP 3 115 319 B1**
(45) Veröffentlichungstag und Bekanntmachung des Hinweises auf die Patenterteilung: **28.08.2019**
(21) Anmeldenummer: 15176147.5
(22) Anmeldetag: 09.07.2015
(51) Int. Cl.: B65G 1/04, B60P 3/00, B65G 1/137, G06Q 10/08, G06Q 50/28, G07F 11/00

(54) **NUTZFAHRZEUG ZUM VERSENDEN VON VERSANDGUT**
COMMERCIAL VEHICLE FOR SENDING OF POSTAL ARTICLE
VEHICULE UTILITAIRE D'ENVOI D'UNE MARCHANDISE EN TRANSIT

(43) Veröffentlichungstag der Anmeldung: 11.01.2017
(73) Patentinhaber: Schmitz Cargobull AG, 48341 Altenberge (DE)
(72) Erfinder: Timmermann, Michael, 46514 Schermbeck (DE); Beelmann, Reinhard, 45721 Haltern am See (DE); Kerkhoff, Alois, 48485 Neuenkirchen (DE)
(74) Vertreter: Cohausz & Florack

(56) Entgegenhaltungen:
- WO-A1-02/16233
- WO-A1-2014/111483
- US-A1- 2005 274 731
- US-A1- 2007 073 552

## Beschreibung

Die Erfindung betrifft ein Nutzfahrzeug mit einem Aufbau, der einen Laderaum zum Verstauen von individuell an einen Nutzer adressierten Versandgütern umfasst.

Beispiele für Nutzfahrzeuge der in Rede stehenden Art sind selbstfahrende Lastkraftwagen, Anhänger für solche Lastkraftwagen und Sattelauflieger für Sattelzüge, die von einer Zugmaschine gezogen werden.

Bei der Bestellung von Waren im internetbasierten Versandhandel wird heute von den Kunden eine zeitnahe Lieferung erwartet. Die Zustellung der bestellten Ware erfolgt in der Regel durch vom Versandhändler beauftragte oder betriebene Logistikunternehmen, die das Versandgut über Verteilzentren an ihre Zusteller weiterleiten. Durch die Zusteller erfolgt schließlich die persönliche Lieferung an den Kunden.

Diese Vorgehensweise setzt insbesondere bei der Warenlieferung, bei denen der Versandhändler oder das Logistikunternehmen eine Lieferbestätigung durch den Empfänger verlangen, dass die Zusteller ihre Kunden antreffen oder die Lieferung durch einen hierzu vom Adressaten der Lieferung Bevollmächtigten entgegengenommen wird. Gelingt es dem Zusteller nicht, die Lieferung vorzunehmen, hinterlässt er üblicherweise eine Benachrichtigung und hinterlegt die bestellte Ware zur Abholung an einer hierfür vorgesehenen zentralen Stelle. Dort kann der Besteller das Versandgut gegen Vorlage der Benachrichtigung und eines Ausweises zu einem späteren Zeitpunkt abholen.

Um die Zustellung zu vereinfachen, sind sogenannte "Selbstbedienungspackstationen" eingerichtet worden. Diese vollautomatisch arbeitenden Stationen umfassen einzelne den Adressaten zugeordnete Boxen, in denen die bestellte Ware vom Spediteur hinterlegt wird. Die Packstation selbst kann dabei vom Besteller als Lieferadresse für seine Bestellung angegeben werden. Der Zugang zu den Boxen wird über einen Identifikationscode geregelt, der dem Besteller spätestens mitgeteilt wird, wenn die Ware in der Packstation eingelangt ist. Der Besteller kann so jederzeit seine Ware aus der Packstation abholen, ohne dass es dazu der Mitwirkung einer Serviceperson bedarf und ohne dass er an bestimmte Öffnungszeiten gebunden ist.

Ein anderer Ansatz, die individuelle zeitnahe Zustellung von Waren zu ermöglichen, ist der Versuch, bestellte Waren direkt in den Autokofferraum des Bestellers zu liefern. Damit der Zusteller den Kofferraum öffnen kann, muss das Fahrzeug des Bestellers zumindest für den vereinbarten Zeitraum der Lieferung geortet werden können und dem Zusteller eine Zugangsberechtigung zum Kofferraum verschafft werden. Nach heutigem Entwicklungsstand lässt sich diese Zugangsberechtigung nur einmal nutzen und verfällt nach einem festgelegten Zeitraum. Auf dem gleichen Weg soll es zukünftig möglich sein, Pakete im Kofferraum des Fahrzeugs bereitzustellen, die dann vom Zusteller des Speditionsunternehmens zur Versendung abgeholt werden. Voraussetzung für diese Art der Zustellung ist eine Fahrzeugschließanlage, die für die zeitweise Zugänglichkeit eingerichtet ist und gleichzeitig Missbräuche verhindert (DE 10 2011 018 901 A1).

Noch aufwändiger sind Pläne, die Zustellung von bestellter Ware mittels einer Vielzahl von unbemannten Flugzeugen, so genannten "Drohnen", zu erledigen (US 20150120094 A1).

Neben dem voranstehend erläuterten Stand der Technik ist aus der WO 2014/111483 A1 ein Nutzfahrzeug nach dem Oberbegriff des Anspruchs 1 bekannt. Insbesondere, ist aus WO 2014/111483 A1 ein Nutzfahrzeug (Trailer) mit einem Aufbau bekannt, der einen Laderaum zum Verstauen von individuell adressierten Versandgütern umfasst. Dabei ist in dem Laderaum des bekannten Nutzfahrzeugs ein automatisches Stausystem angeordnet, das aus Containern gebildet ist, in denen den auszuliefernden Waren einzelne Staufächer zugewiesen sind. In Abhängigkeit von einem Steuersignal wird mittels einer Scrolleinrichtung das Staufach, in dem sich die Ware des jeweiligen Kunden befindet, so nach vorne bewegt, dass das betreffende Fach dem Kunden an der Übergabeseite des Trailers präsentiert wird.

Aus der US 2007/073552 A1 ist des Weiteren ein Transportsystem bekannt, das einen Server umfasst, der mit einem Benutzer und einem Fahrzeug über einen verdrahteten oder drahtlosen Datenkanal kommuniziert. Der Benutzer stellt dem Server Transportanforderungsinformationen bereit und fordert Transportoptionen vom Server an. Der Benutzer kann den Transport entweder für einen Passagier oder für eine Verpackung oder einen anderen Gegenstand suchen, der zur Lieferung an einen bestimmten Bestimmungsort transportiert werden soll. Der Server wertet die vom Benutzer bereitgestellten Informationen aus und bestimmt Transportoptionen, einschließlich verfügbarer Routen (Zeiten, Wege usw.) und der Gebühren, die mit den verschiedenen verfügbaren Routen verbunden sind. Der Server benachrichtigt den Benutzer über die Transportoptionen, einschließlich der verfügbaren Routen und der damit verbundenen Kosten. Der Benutzer wählt eine der Transportoptionen aus und fordert den Transport gemäß den angegebenen Reiseparametern an. Der Server bucht den angeforderten Transport und benachrichtigt das Transportfahrzeug über den neuen Transportauftrag.

Aus der US 2005/274731 A1 ist schließlich eine Vorrichtung zur Handhabung von Artikeln bekannt. Die Vorrichtung umfasst eine Speicherstruktur, in die die Artikel eingelegt und aus der die Artikel entnommen werden können. Dazu werden die Artikel in säulenartige Behälter gelegt, die an einer Seitenwand eine Ladeöffnung aufweisen. Zum Verschließen und Öffnen der Ladeöffnung ist ein spezieller Mechanismus vorgesehen. In den Behältern werden die Artikel aufeinander gestapelt. Die Behälter werden in einem Container dicht an dicht aufgestellt. Die Entladung der so gebildeten Speicherstruktur mit den Artikeln erfolgt mittels eines Robotersystems, das einen in horizontaler und vertikaler Richtung verfahrbares Greifersystem umfasst.

Vor dem Hintergrund des voranstehend erläuterten Standes der Technik hat sich die Aufgabe ergeben, ein kostengünstiges Mittel zur Verfügung zu stellen, mit dem sich der Versand und die Zustellung von Versandgut an den jeweiligen Besteller weiter vereinfachen lassen.

Diese Aufgabe ist von der Erfindung durch ein Nutzfahrzeug mit den in Anspruch 1 genannten Merkmalen gelöst worden.

Vorteilhafte Ausgestaltungen der Erfindung sind in den abhängigen Ansprüchen angegeben und werden nachfolgend, wie der allgemeine Erfindungsgedanke, im Einzelnen erläutert.

Die Erfindung basiert auf dem Gedanken, aufbauend auf einem konventionellen Nutzfahrzeug eine mobile Packstation auszubilden und dabei die bei dem Nutzfahrzeug zur Verfügung stehende Laderaumkapazität und sonstigen Funktionalitäten optimal zu nutzen.

Zu diesem Zweck sieht die Erfindung ein Nutzfahrzeug mit einem Aufbau vor, der einen Laderaum zum Verstauen von individuell adressierten Versandgütern umfasst
- wobei in dem Laderaum ein automatisches Stausystem angeordnet ist, das dazu eingerichtet ist, in Abhängigkeit von einem Steuersignal mittels einer Transporteinrichtung ein bestimmtes Versandgut von einem diesem Versandgut im Laderaum zugeordneten Stauplatz zu einer Übergabeeinrichtung und an der Übergabeeinrichtung wartendes Versandgut an einen diesem Versandgut zugewiesenen Stauplatz im Laderaum zu transportieren,
- wobei die Übergabeeinrichtung Teil einer Übergabestation ist, die mit dem Nutzfahrzeug verbunden ist,
- wobei die Übergabestation eine Identifizierungseinrichtung zur Entgegennahme eines Identifikationscodes aufweist, der einem bestimmten Nutzer zugeordnet ist, und
- wobei an dem Nutzfahrzeug eine Steuereinrichtung vorgesehen ist, die in Abhängigkeit von dem in der Identifizierungseinrichtung vorliegenden Identifikationscode ein Steuersignal an das Stausystem abgibt, welches daraufhin ein dem Identifikationscode zugeordnetes, im Laderaum verstautes Versandgut zur Übergabeeinrichtung oder ein an der Übergabeeinrichtung bereitstehendes Versandgut zu dem ihm zugewiesenen Stauplatz im Laderaum transportiert,
erfindungsgemäß dadurch gekennzeichnet, dass
das Stausystem die Versandgüter in Stapeln verstaut und dass das Transportmittel zum Entnehmen oder Verstauen von Transportgut in einer Ebene verfährt, die oberhalb der Stapel im Laderaum des Nutzfahrzeugs vorgesehen ist.

Da bei einem erfindungsgemäßen Nutzfahrzeug ein automatisch arbeitendes Stausystem vorhanden ist, kann es beim Versender oder beim von ihm beauftragten Logistikunternehmen zeitsparend unter Ausnutzung der von einem solchen System hierzu zur Verfügung gestellten Funktionen mit den an die Besteller ("Nutzer") zu liefernden Waren ("Versandgüter") bestückt werden. Anschließend wird das Nutzfahrzeug zu einem Übergabeort gefahren und dort so abgestellt, dass Nutzern, die bestellte Ware abholen wollen oder Ware zum Versand übergeben wollen, der freie Zugang ermöglicht ist.

Der Schutz der im Laderaum des erfindungsgemäßen Nutzfahrzeugs verstauten Waren ist dabei problemlos gewährleistet, da Aufbauten von Nutzfahrzeugen der erfindungsgemäß verwendeten Art üblicherweise bereits zollsicher ausgerüstet sind.

Besonders einfach lässt sich die sichere Verwahrung von Versandgütern in einem erfindungsgemäßen Nutzfahrzeug dann gewährleisten, wenn es sich bei dem Aufbau um einen sogenannten "Kofferaufbau" handelt, der sich durch feste Seitenwände und ein ebenso festes Dach auszeichnet.

Solche Kofferaufbauten haben zudem den Vorteil, dass sie die im von ihnen umgebenen Laderaum verstaute Ware auch thermisch gegenüber der Umgebung abschirmen. Die Gefahr, dass es zu einer Beschädigung der Ware durch Überhitzung oder Unterkühlung kommt, ist so minimiert. Dies gilt insbesondere dann, wenn an dem Kofferaufbau in an sich bekannter Weise eine Maschine zum Temperieren der im Laderaum herrschenden Atmosphäre vorgesehen ist. Solche Maschinen werden in der Praxis auch als "Transportkältemaschinen" bezeichnet und beim Transport von temperaturempfindlichen Gütern eingesetzt. Dabei können derartige Maschinen üblicherweise die Laderaumatmosphäre nicht nur kühlen, sondern auch beheizen, wenn die Umgebungstemperaturen zu niedrig sind. Gleichzeitig ist es möglich, im Laderaum in an sich bekannter Weise Zonen zu bilden, in denen unterschiedliche Atmosphärebedingungen herrschen.

Die Erfindung ermöglicht somit unter Ausnutzung an sich bekannter und in der Praxis bewährter Aggregate, die kostengünstig im Markt zur Verfügung stehen, den sicheren Transport und die ebenso sichere Bereitstellung von bestellter Ware an einem vom Besteller leicht erreichbaren Ort. Anders als bei stationären Packstationen ist es dazu jedoch nicht erforderlich, an den Übergabeorten feste Einrichtungen vorzusehen. Stattdessen kann das erfindungsgemäße Nutzfahrzeug an jedem öffentlich zugänglichen Ort abgestellt werden, an dem ein Abstellen für eine ausreichend lange Zeit gestattet ist. Anschließend kann das Nutzfahrzeug zu einem weiteren Übergabeort bewegt werden, um auch dort das Abholen und Abgeben von Versandgut zu ermöglichen. Auf diesem Wege kann insbesondere im ländlichen, weniger dicht besiedelten Raum eine effektive Belieferung auch außerhalb der typischen Arbeitszeiten gewährleistet werden, ohne dass dazu besonderer Personalaufwand erforderlich ist.

Dabei erweist sich die Erfindung dann als besonders praxisgerecht, wenn es sich bei dem erfindungsgemäßen Nutzfahrzeug um einen Anhänger oder um einen großvolumigen Sattelauflieger oder um einen klassischen Anhänger handelt, also um Nutzfahrzeuge, die über keinen eigenen Antrieb verfügen, sondern jeweils von einer Zugmaschine zum Übergabeort gezogen werden. Der Vorteil besteht hier darin, dass ein nicht angetriebenes Nutzfahrzeug am jeweiligen Übergabeort über einen langen Zeitraum abgestellt bleiben kann, um eine maximale Verfügbarkeit der durch ihn gebildeten mobilen Packstation für den Nutzer zu bieten, während gleichzeitig die Zugmaschine für andere Zwecke zur Verfügung steht.

Die Verstauung der Ware im Laderaum des erfindungsgemäßen Fahrzeugs kann unter optimaler Ausnutzung des auf dem jeweiligen Nutzfahrzeug zur Verfügung stehenden Raums vorgenommen werden. Dies wird erfindungsgemäß zum einen dadurch erreicht, dass zur Übergabe der Ware an die Besteller nur so viele Übergabestationen vorgesehen sind, wie das jeweilige Stausystem versorgen kann. D.h., anders als bei Packstationen, an denen pro Besteller eine Box vorgesehen ist, die jeweils vom Zusteller individuell mit der bestellten Ware bestückt werden muss, erfolgt bei einem erfindungsgemäßen Nutzfahrzeug die individuelle Bereitstellung und Ausgabe der Ware erst nach gesonderter Anforderung an der typischerweise einzigen Übergabeeinrichtung des erfindungsgemäßen Nutzfahrzeugs. Dies schließt selbstverständlich nicht aus, dass mehr als eine Übergabeeinrichtung an einem erfindungsgemäßen Fahrzeug vorhanden ist, wenn bei ihm ein Stausystem mit ausreichender Leistungsfähigkeit vorgesehen ist. Entscheidend ist, dass in dem Nutzfahrzeug keine den Nutzern individuell zugeteilten Übergabeplätze vorhanden sind, sondern dass die Übergabe und Entgegennahme von Versandgut jeweils auf gesonderte Anforderung durch den Nutzer automatisch erfolgt.

Die Anforderung zur Übergabe wird erfindungsgemäß über die Eingabe eines Identifikationscodes ausgelöst, durch den die Ware, die vom Stausystem aus dem im Laderaum des Nutzfahrzeugs gebildeten Versandgutlager entnommen werden soll, eindeutig dem Besteller zugeordnet ist. Auf diese Weise ist nicht nur ein zeitsparendes Auffinden der jeweils auszugebenden Ware, sondern auch eine beweissichere Übergabe der Ware an den jeweils Berechtigten gewährleistet.

Für den Fall, dass der Nutzer in der Übergabestation ein Versandgut zum Transport übergeben will, kann in der Übergabestation ein Interface vorgesehen sein, über das eine Kommunikation zwischen dem am Nutzfahrzeug für die Abwicklung des Übergabeprozesses vorgesehenen Steuergerät oder der Logistikzentrale und dem Nutzer geführt werden kann.

Auch ist es denkbar, die Informationen über den jeweiligen Übergabeort über eine Internetplattform, einen elektronischen Informationsdienst oder desgleichen bekannt zu geben werden. Ebenso kann dem Nutzer über ein entsprechendes, beispielsweise Internet-gestütztes Interface ermöglicht werden, einen Stauraum im Nutzfahrzeug für sein Versandgut zu reservieren.

Die Übergabestation kann beispielsweise in einer gesonderten Kabine angeordnet sein, die nach Erreichen des Übergabeorts außerhalb des Fahrzeugs aufgestellt wird. Bei dieser Ausgestaltung kann die Übergabe der auszugebenden Ware an die Übergabestation beispielsweise über eine gegenüber der Umgebung abgeschirmte Schleuse erfolgen.

Denkbar ist auch eine Übergabestation, die nach Art einer Übergabeklappe oder desgleichen in eine Seitenwand des Aufbaus des Nutzfahrzeugs eingelassen ist. Die Identifizierungseinrichtung kann in diesem Fall in der von konventionellen, in Hauswände eingelassenen Geldautomaten bekannten Weise ausgebildet sein. Der Abholer der bestellten Ware steht bei dieser Ausgestaltung somit während des Übergabevorgangs seitlich an dem Nutzfahrzeug, dessen Aufbau im Übrigen während der Bereitstellung des Nutzfahrzeugs am Übergabeort gegenüber der Umgebung abgeschlossen ist.

Eine für die Nutzer besonders bequeme und gleichzeitig sichere Übergabe kann nach einer weiteren Variante der Erfindung dadurch realisiert werden, dass die Übergabestation auf dem erfindungsgemäßen Nutzfahrzeug selbst vorgesehen ist. Dies kann baulich dadurch verwirklicht werden, dass auf dem Nutzfahrzeug eine vom Laderaum unabhängige separate Kabine vorgesehen wird, die vom Nutzer betreten werden kann und in der die für die Übergabe der Ware benötigten Einrichtungen vorgesehen sind.

Eine besonders einfache Umrüstung von konventionell aufgebauten Nutzfahrzeugen kann dabei dadurch realisiert werden, dass vom Laderaum des Aufbaus ein Teilbereich abgetrennt wird, in dem die Übergabestation vorgesehen ist. Bei Nutzfahrzeugen, die mit einem konventionellen Kofferaufbau versehen sind, bei denen der Zugang zum Laderaum üblicherweise über eine an der Rückseite vorgesehene Türanlage erfolgt, bietet sich hierfür ein an die betreffende Rückseite angrenzender Bereich an.

Die Übergabestation kann auch nach Art eines Containers ausgebildet sein, der als fertig vorgefertigte selbstständige Baueinheit in den Laderaum des Nutzfahrzeugs eingeschoben werden kann. Bei einer solchen Ausführung erweist es sich besonders vorteilhaft, wenn die Übergabestation am rückseitigen, über eine konventionellerweise dort vorgesehene Türanlage zugänglichen Bereich des Laderaums angeordnet ist. Bei einer solchen Ausgestaltung kann die Übergabestation beispielsweise zum Beladen des Laderaums mit der bestellten Ware aus dem Laderaum gezogen werden, um nach Ende des Ladevorgangs dort wieder positioniert zu werden.

Als Stausystem für die erfindungsgemäßen Zwecke sind solche Systeme geeignet, bei denen die Versandgüter in vertikaler Richtung übereinander zu Stapeln gestapelt werden. Erforderlichenfalls können dazu in an sich bekannter Weise Behälter, die das jeweilige Versandgut aufnehmen, verwendet werden, um ordnungsgemäß handhabbare oder standfeste Stapel zu bilden.

Stausysteme, die ein solches Stapeln ermöglichen, sind an sich bekannt. Hier erweisen sich für die erfindungsgemäßen Zwecke solche Stausysteme als geeignet, bei denen das Transportmittel, welches das jeweils auszugebende Versandgut aus dem ihm jeweils zugewiesenen Stapel entnimmt und zur Übergabestation bewegt oder ein zu versendendes Gut an der Übergabestation übernimmt und zu einem ihm zugewiesenen Stauplatz bewegt, in einer Ebene verfährt, die oberhalb der Staustapel im Laderaum vorgesehen ist. Solche Stausysteme sind beispielsweise in der WO 98/49075 A1 oder der WO 2013/167907 A1 beschrieben.

Die Identifizierung des Nutzers an der Identifikationseinrichtung kann in jeder für diese Zwecke geeigneten Weise erfolgen. Beispielsweise kann der Nutzer hierzu über eine geeignete Tastatur manuell einen numerischen Code, wie ein Kennwort oder eine den jeweiligen Übergabevorgang individualisierenden anderen numerischen Code, eingeben, der ihm vom Versender zwecks der Identifizierung zugesendet wird. Alternativ oder ergänzend kann der Nutzer sich an einem als Identifikationseinrichtung vorgesehenen geeigneten Lesegerät mittels einer Chipkarte, seines Personalausweises, einer Magnetkarte oder einem vergleichbaren Träger von persönlichen Informationen ausweisen. Ebenso ergänzend oder alternativ ist es denkbar, den Nachweis für die Berechtigung zu dem jeweiligen Übergabevorgang durch einen an einem optischen Lesegerät bekanntzugebenden optischen Code, wie beispielsweise einen Strich- oder QR-Code, oder einen akustischen Code zu führen, der über ein Mikrophon eingeben wird.

Besonders geeignet für die erfindungsgemäßen Zwecke sind solche Identifikationscodes, die dem Nutzer vom Versender oder vom Logistikunternehmen zugesendet werden können, wenn bekannt ist, wann die Ware am jeweiligen Übergabeort abgeholt werden kann. Systeme, die die Erzeugung, die datentechnische Zuordnung zur bestellten Ware und zum Besteller sowie die Fernübertragung derartiger Nachrichten ermöglichen, sind aus dem Stand der Technik hinlänglich bekannt und werden beispielsweise bei der Vergabe von Identifikationscodes, die das Betreten bestimmter Bereiche, wie beispielsweise den Abfertigungszonen in einem Flughafen gestatten ("Bordkarten"), laufend eingesetzt.

Selbstverständlich kann es sich bei dem "Nutzer" eines erfindungsgemäßen Nutzfahrzeugs auch um einen vom eigentlichen Besteller beauftragten Boten oder sonstigen Bevollmächtigten handeln.

Grundsätzlich ist es möglich, die bei einem erfindungsgemäßen Fahrzeug vorgesehene Steuereinrichtung mit allen Informationen zu bestücken, die für eine zuverlässige Abwicklung des Übergabeprozesses benötigt werden. Eine besonders sichere Abwicklung des Versands und der Übergabe von Versandgut ergibt sich bei einem erfindungsgemäßen Nutzfahrzeug jedoch dann, wenn eine mit der Steuereinrichtung verkoppelte Sende- und Empfangseinrichtung zum Empfangen oder zum Versenden von Daten vorhanden ist, mit deren Hilfe die Steuereinrichtung eine Überprüfung des dem jeweiligen Nutzer der Übergabestation zugeordneten Identifikationscodes durchführen kann. Auf diese Weise kann der jeweilige Übergabevorgang beispielsweise in einer Logistikzentrale überwacht und nachweissicher protokolliert werden. Ebenso ist es auf diesem Wege möglich, bei Störungen per Datenfernübertragung korrigierend in die Funktion des Stausystems oder der Übergabestation einzugreifen.

Ebenso zweckmäßig im Hinblick auf die Abwicklung des Übergabeprozesses kann es sein, wenn das erfindungsgemäße Nutzfahrzeug eine Sende- und Empfangseinrichtung zum Empfangen oder zum Versenden von Daten aufweist, anhand derer die jeweilige Position des Fahrzeugs bestimmbar ist. Auf diese Weise kann von einer Logistikzentrale eindeutig erfasst werden, wann das Nutzfahrzeug mit der auszuliefernden Ware den jeweils vorgesehenen Übergabeort erreicht hat, wann spätestens eine entsprechende Benachrichtigung an die Nutzer abzusenden ist und wann das Nutzfahrzeug wieder im Logistikzentrum eintreffen wird, um es erneut mit Versandgut zu beladen. Ebenso dient eine solche Überwachung als Abschreckung gegen Diebstahl des Fahrzeugs und ermöglicht im Fall, dass es dennoch zu einem Diebstahl kommt, die Nachverfolgung des gestohlenen Fahrzeugs.

Im Hinblick auf den Nachweis des ordnungsgemäßen Zustands der an den Besteller zu übergebenden Ware kann es zudem vorteilhaft sein, den Zustand der Ware im Laderaum mittels einer dazu geeigneten Sende- und Empfangseinrichtung zu überwachen. Diese Überwachung kann insbesondere die im Laderaum herrschende Atmosphäre, deren Feuchtigkeit, die Temperatur im Laderaum und desgleichen betreffen, durch eine per Datenfernübertragung steuerbare, an dem Nutzfahrzeug optional vorgesehene Transportkühlmaschine, beeinflussen.

Als besonders vorteilhaft erweist es sich im Hinblick auf die voranstehend erwähnten Möglichkeiten der Nutzung von Datenfernübertragung zur Überwachung oder Steuerung des erfindungsgemäßen Nutzfahrzeugs, dass geeignete Sende- und Empfangseinrichtungen bei den Nutzfahrzeugtypen, auf denen die Erfindung aufbaut, bereits standardmäßig vorgesehen sind.

Den voranstehenden Erläuterungen entsprechend werden bei einem erfindungsgemäßen Nutzfahrzeug zum Versenden von Versandgütern folgende Arbeitsschritte absolviert:
a) Bereitstellen eines gemäß einem der voranstehenden Ansprüche ausgebildeten Fahrzeugs an einem Ladeplatz;
b) Verstauen von Versandgut im Laderaum des Fahrzeugs;
c) Bewegen zu und Abstellen des Fahrzeugs an einem bestimmten Übergabeort;
d) Zuweisen eines Identifikationscodes an einen Nutzer, für den ein Versandgut in dem Laderaum verstaut ist;
e) Bekanntgeben des Identifikationscodes an der Indentifizierungseinrichtung durch den Nutzer;
f) Transportieren des Versandguts mittels des Stausystems zu der Übergabeeinrichtung;
g) Entnehmen des Versandguts aus Übergabeeinrichtung durch den Nutzer.

Ein erfindungsgemäßes Fahrzeug ist, wie oben schon erwähnt, nicht nur zur Übergabe von Versandgütern geeignet, die von einem Versender zum Besteller gesendet werden, sondern kannauch dazu genutzt werden, Waren vom Nutzer zum Versender zu schicken. Dieser Fall tritt im Versandhandel regelmäßig auf, wenn Ware, bei der der jeweilige Kunde von seinem Rückgaberecht Gebrauch macht, als Retoure an den Versender zurückgesendet werden muss, oder wenn eine durch ein erfindungsgemäßes Fahrzeug gebildete Packstation im Sinne einer Poststelle genutzt werden soll, über die es möglich ist, Poststücke zu versenden.

Um diese Funktionalität auch aus verfahrenstechnischer Sicht zu ermöglichen, werden zusätzlich die folgenden Arbeitsschritte durchlaufen:
h) Übergeben von zu versendendem Versandgut durch den Nutzer an die Übergabeeinrichtung;
i) Transportieren des vom Nutzer übergebenen Versandguts an einen dem Versandgut zugewiesenen Stauplatz im Laderaum des Fahrzeugs mittels des Stausystems;
j) Bewegen des Fahrzeugs zu dem Ladeplatz;
k) Entladen des übergebenen Versandguts.

Auch hier kann der Arbeitsschritt h) beispielsweise die Zuweisung eines Identifikationscodes umfassen, anhand dessen beispielsweise die Rückabwicklung eines Kaufs, bei dem der Nutzer sein Rückgaberecht nutzt, die Nachverfolgung der Rücksendung und die Rückerstattung des Kaufpreises abwickeln.

Nachfolgend wird die Erfindung anhand einer ein Ausführungsbeispiel darstellenden Zeichnung näher erläutert. Es zeigen jeweils schematisch:

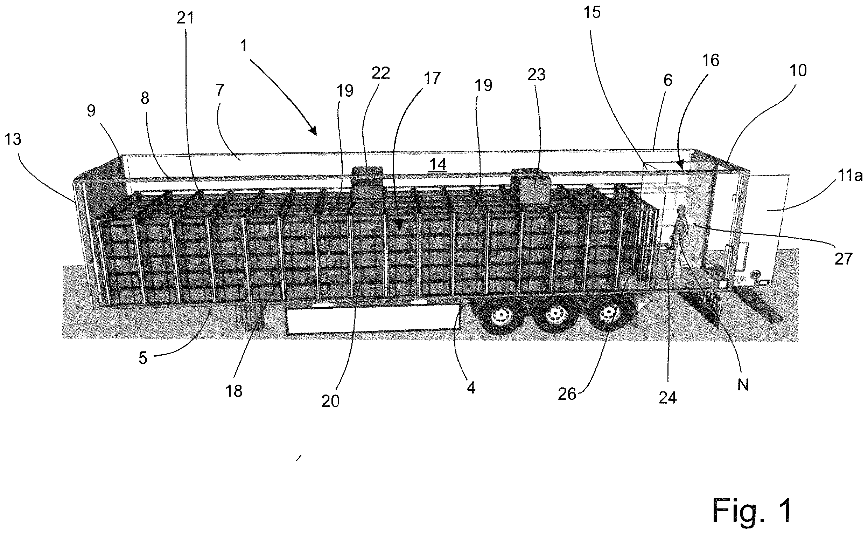

- Fig. 1: ein Nutzfahrzeug in einer aufgebrochenen perspektivischen Ansicht aus seitlicher Richtung;

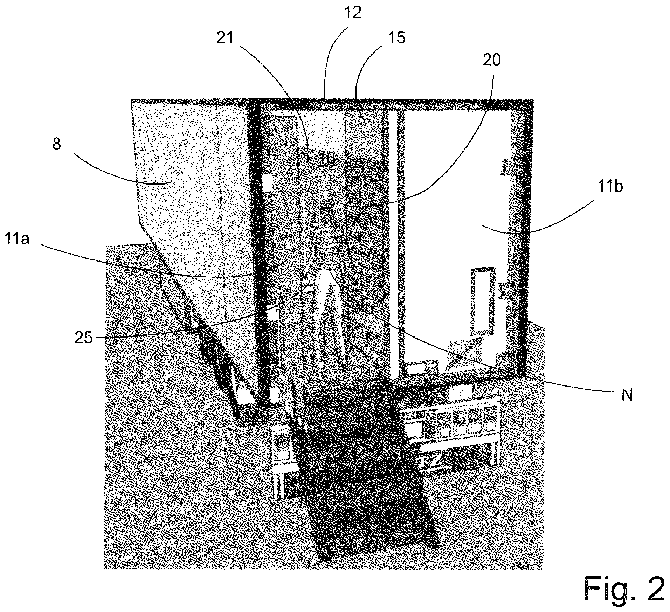

- Fig. 2: das Nutzfahrzeug gemäß Fig. 1 in einer perspektivischen Ansicht von seiner Rückseite her;

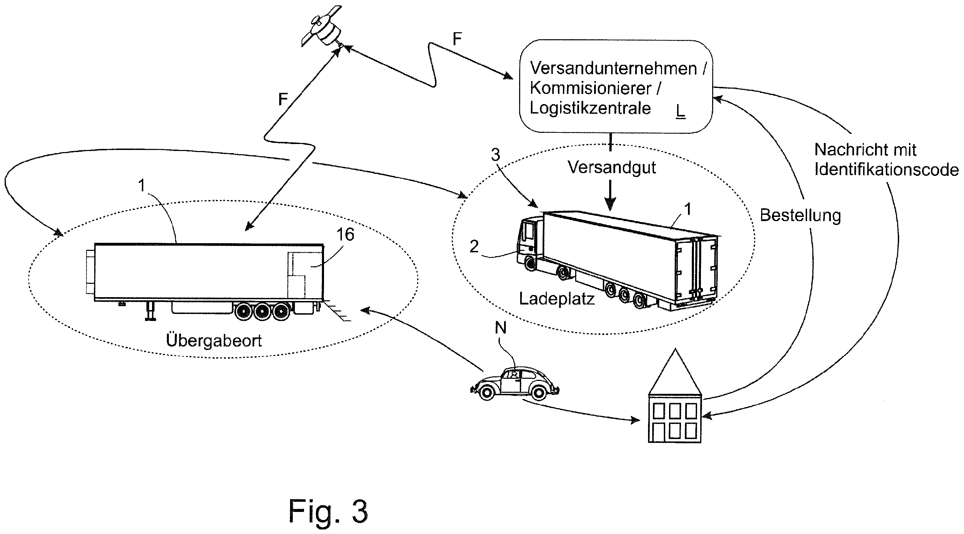

- Fig. 3: ein Diagramm, in dem die Abwicklung eines Verfahrens dargestellt ist.

Beim vorliegenden Beispiel kommt als Nutzfahrzeug ein Sattelauflieger 1 für einen Sattelzug 2 zum Einsatz, der aus dem Sattelauflieger 1 und einer handelsüblichen Zugmaschine 3 gebildet ist.

Der Sattelauflieger 1 entspricht in seinem Grundaufbau einem ebenso handelsüblichen Sattelauflieger, der für den Transport von temperaturempfindlichen Gütern eingesetzt wird. Dementsprechend weist der Sattelauflieger 1 ein Chassis 4, an dem die Räder des Sattelaufliegers 1 gelagert sind und das einen Boden 5 mit einem darauf errichteten, quaderförmigen Kofferaufbau 6 trägt. Der Kofferaufbau 6 weist in ebenso bekannter Weise aufgebaute feste Längsseitenwände 7,8 eine der Zugmaschine 3 zugeordnete vordere feste Stirnwand 9, eine am gegenüberliegenden Ende des Sattelaufliegers 1 angeordnete Rückseite 10 mit einer Doppelflügeltüranlage und ein festes Dach 12 auf. An der freien Seite der Stirnwand 9 ist eine ebenfalls konventionell ausgebildete Transportkältemaschine 13 befestigt.

Der Kofferaufbau 6 umgrenzt einen Laderaum 14, der über die Transportkältemaschine 13 in wiederum bekannter Weise temperiert werden kann.

Im Laderaum ist ein an die Doppelflügeltüranlage angrenzender Bereich durch feste, sich zwischen Dach 12 und Boden 5 erstreckende Stellwände 15 derart abgegrenzt, dass dort eine kabinenartige, über den einen Türflügel 11a der Doppeltüranlage zugängliche Übergabestation 16 gebildet ist.

Der übrige Bereich des Laderaums 14 wird von einem Stausystem 17 eingenommen, das nach Art des in der schon erwähnten WO 98/49075 A1 oder der WO 2013/167907 A1 beschriebenen Systems ausgebildet ist. Demnach weist das Stausystem 17 ein Grundgerüst 18 auf, in dem vertikal ausgerichtete Stapel 19 aus Behältern 20 gebildet sind. Das Grundgerüst 18 trägt an seiner dem Dach 12 zugeordneten Oberseite ein Schienensystem 21, das aus rechtwinklig zueinander angeordneten Schienenstücken gebildet ist. Im zwischen dem Dach 12 und der Oberseite des Grundgerüsts 18 fahrende auf dem Schienensystem 21 als Transportmittel dienende Robotereinheiten 22,23, die so ausgerüstet sind, dass sie durch Umstapeln der Stapel 19 die dort jeweils verstauten Behälter 20 mit dem darin jeweils abgelegten Versandgut gezielt entnehmen können.

Die Robotereinheiten 22,23 transportieren den jeweiligen Behälter 20, in dem sich das jeweils angeforderte, einem Nutzer N zu übergebende Versandgut befindet, zu einer Übergabeeinrichtung 24, die an einer Stellwände 15 der Übergabestation 16 angeordnet ist.

Um das betreffende Versandgut anzufordern gibt der Nutzer N einen Identifikationscode über eine zur Entgegennahme dieses Identifikationscodes geeignete ausgebildete Identifikationseinrichtung 25 bekannt, die neben der Übergabeeinrichtung 24 in der Übergabestation 16 eingerichtet ist.

Die Übergabeeinrichtung 24 kann auch zur Übergabe von Versandgut durch den Nutzer N an das Stausystem 17 genutzt werden. In diesem Fall übernimmt einer der Robotereinheiten 22,23 an der Übergabeeinrichtung 24 das vom Nutzer N dort eingelegte Versandgut, ordnet ihm den vom Nutzer N bekannt gegebenen Identifikationscode zu und verstaut es in einem der Behälter 20 an einem ihm ebenso zugewiesenen Platz innerhalb des Stausystems 17.

Die Abwicklung des jeweiligen Übergabeprozesses wird mittels einer Steuereinrichtung 26 abgewickelt, die die von der Identifikationseinrichtung 25 entgegengenommenen und ausgegebenen Informationen verarbeitet sowie das Stausystem 17 und die Übergabeeinrichtung 24 entsprechend steuert.

Gleichzeitig steht die Steuereinrichtung 26 über eine konventionelle satellitenunterstützte Verbindung F zur drahtlosen Fernübertragung von Daten mit einer Logistikzentrale L in Verbindung. Über die Verbindung F wird die Logistikzentrale L online über die Übergabeprozesse informiert gehalten, Berechtigungen zur Durchführung einer Übergabe von Versandgut überprüft, Benachrichtigungen an die Nutzer N erzeugt etc. Gleichzeitig kann die Logistikzentrale L über die Verbindung F in die Funktion der Steuereinrichtung 26 eingreifen, um mit dem Nutzer N erforderlichenfalls direkt zu kommunizieren, Funktionsstörungen zu beseitigen und desgleichen.

Die Verbindung F wird dabei über die an dem Sattelauflieger 1 standardmäßig vorgesehenen, hier weiter nicht dargestellten Einrichtungen zur Fernüberwachung der Funktion des Sattelaufliegers 1 aufgebaut. Solche Einrichtungen sind in der Fachsprache unter dem Begriff "Telematik" bekannt. Sie erlauben nicht nur die Überwachung der Laufleistung, Gewichtsstrecke, Bremsfunktion und desgleichen des Sattelaufliegers 1, sondern verkoppeln diese Informationen auch mit Daten, beispielsweise GPS-Daten, anhand derer sich der jeweilige Standort des Sattelaufliegers 1 bestimmen lässt. Darüber hinaus liefern sie Informationen über den Zustand der Transportkältemaschine 13. Beispiele für entsprechende Telematikeinrichtungen sind in der Broschüre "Cargobull Telematics - 100 % mehr Transparenz für Ihr Business - 100 gute Gründe für Ihre punktgenaue Disposition" - September 2008, der Broschüre "i-Box - Universalschnittstelle für Telematikanwendungen" - Ingersoll-Rand Company Limited 2006, in der US 5,437,163 A, der GB 2 408 792 A oder der EP 2 445 751 beschrieben.

Die Beladung des Stausystems 17 mit neuen Versandgütern erfolgt über eine Fördereinrichtung 27, die abgeschirmt durch eine Stellwand 15 seitlich neben der Übergabestation 16 bis zum während der Öffnung der Übergabestation 16 feststehenden verschlossenen Flügel 11b der Doppelflügeltüranlage geführt ist.

Ein Versandunternehmen, das beispielsweise über ein Internetportal Waren anbietet, nimmt von einem Nutzer N Bestellungen entgegen. Bestellungen einer größeren Zahl von Nutzern N aus einer bestimmten Region oder einem bestimmten Gebiet einer größeren Stadt werden kommissioniert und in einer Logisitikzentrale in das Stausystem 16 des Sattelaufliegers 1 des Sattelzugs 2 gepackt. Der Sattelzug 2 fährt anschließend zu einem Übergabeort, wo der Sattelauflieger 1 abgestellt und von der Zugmaschine 3 abgekoppelt wird. Der Fahrer der Zugmaschine 3 öffnet am Übergabeort die Übergabestation 16, bereitet sie so vor, dass sie von Nutzern N betreten und genutzt werden kann. Anschließend verlässt der Fahrer mit der Zugmaschine 3 den Übergabeort, um beispielsweise weitere mit Versandgut bestückte, dem Sattelauflieger 1 entsprechende Sattelauflieger an andere Übergabeorte zu bringen.

Der Nutzer N, der eine Lieferung von Versandgut erwartet, wird vom Versandunternehmen per Datenfernübertragung (E-Mail, SMS oder desgleichen) über das Eintreffen des Sattelaufliegers 1 informiert. Gleichzeitig wird ihm der Identifikationscode übermittelt, den er zum Nachweis seiner Berechtigung zur Übernahme des Versandguts in der Übergabestation 16 benötigt.

Nach einer bestimmten Zeitspanne fährt die Zugmaschine 3 den Übergabeort erneut an. Die Übergabestation 16 wird nun geschlossen und der Sattelauflieger 1 wieder an die Zugmaschine 3 angekoppelt, um für eine neue Beladung zur Logistikzentrale zurückgefahren oder zur Übergabe von weiterem Versandgut an andere Nutzer zu einem anderen Übergabeort bewegt zu werden.

### BEZUGSZEICHEN

- 1: Sattelauflieger (Nutzfahrzeug)
- 2: Sattelzug
- 3: Zugmaschine
- 4: Chassis des Sattelaufliegers 1
- 5: Boden des Sattelaufliegers 1
- 6: Kofferaufbau des Sattelaufliegers 1
- 7,8: Längsseitenwände des Kofferaufbaus 6
- 9: vordere Stirnwand des Kofferaufbaus 6
- 10: Rückseite des Kofferaufbaus 6
- 11a,11b: Türflügel der Doppeltüranlage an der Rückseite 10
- 12: Dach des Kofferaufbaus 6
- 13: Transportkältemaschine
- 14: Laderaum
- 15: Stellwände
- 16: Übergabestation
- 17: Stausystem
- 18: Grundgerüst
- 19: Stapel
- 20: Behältern
- 21: Schienensystem
- 22,23: Robotereinheiten
- 24: Übergabeeinrichtung
- 25: Identifikationseinrichtung
- 26: Steuereinrichtung
- 27: Fördereinrichtung

- F: satellitenunterstützte Verbindung
- L: Logistikzentrale
- N: Nutzer

## Patentansprüche

1. Nutzfahrzeug mit einem Aufbau, der einen Laderaum (14) zum Verstauen von individuell adressierten Versandgütern umfasst,
- wobei in dem Laderaum (14) ein automatisches Stausystem (17) angeordnet ist, das dazu eingerichtet ist, in Abhängigkeit von einem Steuersignal mittels einer Transporteinrichtung (22,23) ein bestimmtes Versandgut von einem diesem Versandgut im Laderaum (14) zugeordneten Stauplatz zu einer Übergabeeinrichtung (24) und an der Übergabeeinrichtung (24) wartendes Versandgut an einen diesem Versandgut zugewiesenen Stauplatz im Laderaum (14) zu transportieren,
- wobei die Übergabeeinrichtung (24) Teil einer Übergabestation (16) ist, die mit dem Nutzfahrzeug (1) verbunden ist,
- wobei die Übergabestation (16) eine Identifizierungseinrichtung (25) zur Entgegennahme eines Identifikationscodes aufweist, der einem bestimmten Nutzer (N) zugeordnet ist,
- wobei an dem Nutzfahrzeug (N) eine Steuereinrichtung (26) vorgesehen ist, die in Abhängigkeit von dem in der Identifizierungseinrichtung (25) vorliegenden Identifikationscode ein Steuersignal an das Stausystem (17) abgibt, welches daraufhin ein dem Identifikationscode zugeordnetes, im Laderaum (14) verstautes Versandgut zur Übergabeeinrichtung (24) oder ein an der Übergabeeinrichtung (24) bereitstehendes Versandgut zu dem ihm zugewiesenen Stauplatz im Laderaum (14) transportiert,
**dadurch gekennzeichnet, dass** das Stausystem (17) die Versandgüter in Stapeln (19) verstaut und **dass** das Transportmittel (22,23) zum Entnehmen oder Verstauen von Transportgut in einer Ebene verfährt, die oberhalb der Stapel (19) im Laderaum (14) des Nutzfahrzeugs (1) vorgesehen ist.

2. Nutzfahrzeug nach Anspruch 1, **dadurch gekennzeichnet, dass** das Nutzfahrzeug ein Anhänger oder Auflieger für ein Zugfahrzeug (3) ist.

3. Nutzfahrzeug nach einem der voranstehenden Ansprüche, **dadurch gekennzeichnet, dass** der Aufbau nach Art eines Kofferaufbaus mit festen Seitenwänden (7,8,9) und einem festen Dach (12) ausgebildet ist.

4. Nutzfahrzeug nach einem der voranstehenden Ansprüche, **dadurch gekennzeichnet, dass** von dem Laderaum (14) ein Teilbereich abgetrennt ist, in dem die Übergabestation (16) vorgesehen ist.

5. Nutzfahrzeug nach einem der voranstehenden Ansprüche, **dadurch gekennzeichnet, dass** es mit einer Einrichtung (13) zum Temperieren der im Laderaum (14) herrschenden Atmosphäre ausgestattet ist.

6. Nutzfahrzeug nach einem der voranstehenden Ansprüche, **dadurch gekennzeichnet, dass** die Identifizierungseinrichtung (25) eine Eingabeeinrichtung zum Eingeben des Identifikationscodes umfasst.

7. Nutzfahrzeug nach einem der voranstehenden Ansprüche, **dadurch gekennzeichnet, dass** eine mit der Steuereinrichtung (26) verkoppelte Sende- und Empfangseinrichtung zum Empfangen oder zum Versenden von Daten vorgesehen ist, anhand derer die Steuereinrichtung (26) eine Überprüfung des dem jeweiligen Nutzer der Übergabestation (16) zugeordneten Identifikationscodes durchführt.

8. Nutzfahrzeug nach einem der voranstehenden Ansprüche, **dadurch gekennzeichnet, dass** eine Sende- und Empfangseinrichtung zum Empfangen oder zum Versenden von Daten vorgesehen ist, anhand derer die jeweilige Position des Nutzfahrzeugs (1) bestimmbar ist.

9. Nutzfahrzeug nach einem der voranstehenden Ansprüche, **dadurch gekennzeichnet, dass** eine Sende- und Empfangseinrichtung zum Versenden von Informationen über den Zustand der im Laderaum (14) verstauten Versandgüter vorgesehen ist.

10. Nutzfahrzeug nach einem der Ansprüche 7 - 9, **dadurch gekennzeichnet, dass** die jeweilige Sende- oder Empfangseinrichtung mit einer Sende- und Empfangseinrichtung verkoppelt ist, die Informationen über den Betriebszustand des Nutzfahrzeugs (1) oder dessen Position sendet und empfängt.

## Claims

1. Commercial vehicle having a structure comprising a cargo hold (14) for stowing individually addressed shipping goods,
- whereby an automatic stowage system (17) is arranged in the cargo hold (14), and this stowage system is designed, depending on a control signal, to transport a shipment piece from a stowage space assigned to this shipment piece in the cargo hold (14) to a transfer device (24) using a transport device (22, 23) and to transport a shipment piece waiting on the transfer device (24) to a stowage space assigned to this shipment piece in the cargo hold (14).
- whereby the transfer device (24) is part of a transfer station (16) which is connected to the commercial vehicle (1),
- whereby the transfer station (16) comprises an identification means (25) for receiving an identification code associated with a particular user (N),
- whereby on the commercial vehicle (N) a control device (26) is provided which, depending on the identification code present in the identification device (25), emits a control signal to the stowage system (17), which thereupon transports a shipment piece associated with the identification code and stowed in the cargo hold (14) to the transfer device (24), or a shipment piece standing by on the transfer device (24) to the stowage space assigned to it in the cargo hold (14),
**characterised in that**
the stowage system (17) stows the shipping goods in stacks (19) and **in that** the transport device (22, 23) proceeds to remove or stow transport goods in a plane which is provided above the stacks (19) in the cargo hold (14) of the commercial vehicle (1).

2. Commercial vehicle according to claim 1,
**characterised in that**
the commercial vehicle is a trailer or semitrailer for a towing vehicle (3).

3. Commercial vehicle according to any one of the preceding claims,
**characterised in that**
the structure is designed in the manner of a box body with fixed side walls (7,8,9) and a fixed roof (12).

4. Commercial vehicle according to any one of the preceding claims,
**characterised in that**
a sub-region is separated from the cargo hold (14), in which the transfer station (16) is provided.

5. Commercial vehicle according to any one of the preceding claims,
**characterised in that**
it is equipped with a device (13) for controlling the temperature of the environment prevailing in the cargo hold (14).

6. Commercial vehicle according to any one of the preceding claims,
**characterised in that**
the identification device (25) comprises an input device for inputting the identification code.

7. Commercial vehicle according to any one of the preceding claims,
**characterised in that**
a transmitting and receiving device coupled to the control device (26) is provided for receiving or sending data, by means of which the control device (26) performs a check of the identification code associated with the respective user of the transfer station (16).

8. Commercial vehicle according to any one of the preceding claims,
**characterised in that**
a transmitting and receiving device for receiving or for sending data is provided, by means of which the respective location of the commercial vehicle (1) can be determined.

9. Commercial vehicle according to any one of the preceding claims,
**characterised in that**
a transmitting and receiving device is provided for sending information about the condition of the shipping goods stowed in the cargo hold (14).

10. Commercial vehicle according to any one of claims 7 to 9, **characterised in that**
the respective transmitting or receiving device is coupled to a transmitting and receiving device which transmits and receives information about the operating state of the commercial vehicle (1) or its location.

## Revendications

1. Véhicule utilitaire avec une structure qui comporte un espace de chargement (14) pour le rangement de marchandises en transit adressées individuellement,
- où un système de rangement automatique (17) est agencé dans l'espace de chargement (14), ce système étant conçu de sorte à transporter une marchandise en transit déterminée, en fonction d'un signal de commande et à l'aide d'un dispositif de transport (22, 23), d'un emplacement de rangement associé à cette marchandise en transit dans l'espace de chargement (14) vers un dispositif de transfert (24), et à transporter la marchandise en transit, attendant au niveau du dispositif de transfert (24), vers un emplacement de rangement dans un espace de chargement (14) alloué à cette marchandise en transit,
- où le dispositif de transfert (24) est une partie d'un poste de transfert (16) relié au véhicule utilitaire (1),
- où le poste de transfert (16) présente un dispositif d'identification (25) pour la réception d'un code d'identification associé à un utilisateur particulier (N), et
- où un dispositif de commande (26) est prévu sur le véhicule utilitaire (N), lequel dispositif émet, en fonction du code d'identification présent dans le dispositif d'identification (25), un signal de commande au système de rangement (17), lequel de ce fait transporte une marchandise en transit, associée au code d'identification et rangée dans l'espace de chargement (14), vers le dispositif de transfert (24) ou transporte une marchandise en transit étant à disposition au niveau du dispositif de transfert (24) vers l'emplacement de rangement lui étant associé dans l'espace de chargement (14),
**caractérisé en ce que** le système de rangement (17) range les marchandises en transit en piles (19) et **en ce que** le moyen de transport (22, 23), pour l'extraction ou le rangement de marchandises transportées, se déplace dans un plan s au-dessus des piles (19) dans l'espace de chargement (14) du véhicule utilitaire (1).

2. Véhicule utilitaire selon la revendication 1, **caractérisé en ce que** le véhicule utilitaire est une remorque ou semi-remorque pour un véhicule tracteur (3).

3. Véhicule utilitaire selon l'une des revendications précédentes, **caractérisé en ce que** la structure est conçue à la manière d'un fourgon-caisse avec des parois latérales fixes (7, 8, 9) et un toit fixe (12).

4. Véhicule utilitaire selon l'une des revendications précédentes, **caractérisé en ce qu'**une zone partielle, dans laquelle l'on prévoit le poste de transfert (16), est séparée de l'espace de chargement (14).

5. Véhicule utilitaire selon l'une des revendications précédentes, **caractérisé en ce qu'**il est équipé d'un dispositif (13) pour tempérer l'atmosphère régnant dans l'espace de chargement (14).

6. Véhicule utilitaire selon l'une des revendications précédentes, **caractérisé en ce que** le dispositif d'identification (25) comporte un dispositif de saisie pour saisir le code d'identification.

7. Véhicule utilitaire selon l'une des revendications précédentes, **caractérisé en ce que** l'on prévoit un dispositif émetteur et récepteur couplé au dispositif de commande (26) pour la réception ou l'émission de données, à l'aide desquelles le dispositif de commande (26) effectue une vérification du code d'identification associé à l'utilisateur respectif de du poste de transfert (16).

8. Véhicule utilitaire selon l'une des revendications précédentes, **caractérisé en ce que** l'on prévoit un dispositif émetteur et récepteur pour la réception ou l'émission de données à l'aide desquelles l'on peut déterminer la position respective du véhicule utilitaire (1).

9. Véhicule utilitaire selon l'une des revendications précédentes, **caractérisé en ce que** l'on prévoit un dispositif émetteur et récepteur pour l'envoi d'informations concernant l'état des marchandises en transit rangées dans l'espace de chargement (14).

10. Véhicule utilitaire selon l'une des revendications 7 à 9, **caractérisé en ce que** le dispositif émetteur ou récepteur respectif est couplé à un dispositif émetteur et récepteur qui émet et reçoit des informations concernant l'état de fonctionnement du véhicule utilitaire (1) ou sa position.
